# EUROPEAN PATENT APPLICATION

(11) **EP 3 571 967 A1**
(43) Date of publication of application: **27.11.2019**
(21) Application number: 19163100.1
(22) Date of filing: 15.03.2019
(51) Int. Cl.: A47J 47/08, A47J 47/14, B65D 21/02, B65D 51/24, G09F 11/23

(54) **CONTAINER FOR STORING FOOD**

(30) Priority: 23.05.2018 US 201815986945
(71) Applicant: Dart Industries Inc., Orlando, Florida 32837 (US)
(72) Inventor: Wolters, Sophie, Orlando, FL Florida 32837 (US)
(74) Representative: Barton, Matthew Thomas

(57) **Abstract**

A container for storing food, the container comprising, a base, a lid and a means for indicating a cooking time of food stored in the container, wherein the means comprises a movable part.

## Description

### BACKGROUND OF THE INVENTION

The present invention relates in general to container for storing food comprising a means for indicating a cooking time of food. The means may be set by the user to indicate the cooking time of a food to be stored.

### SUMMARY OF THE INVENTION

An object of the present invention is to provide a container for storing food that keeps food fresh even when it has been removed from its original packaging.

Another object of the present invention is to provide a container for storing food that removes the need for the user to keep the original packaging of food once that packaging has been opened.

These objects are achieved by a container for storing food comprising a base and a lid, wherein the lid engages with the base, preferably rendering the container liquid tight, and more preferably rendering the container air tight. Furthermore the container further comprises a means for indicating a cooking time of the stored food thereby avoiding the need to retain the original packaging for the food on which the cooking time information was held.

A variety of containers suitable for food storage are known in the art. However, despite the clear advantages of storing food in such containers, consumers have demonstrated a reluctance to store certain foods this way. Foods such as pasta, rice and oatmeal, which require cooking before consumption, are often stored in their open original packaging. Consumers are hesitant to throw away the original packaging of such food items and thereby lose the useful information, including cooking time, found thereon. For example even within the general food group of pasta, different past shapes may have different cooking times, for example 14 minutes for farfalle or 12 minutes for fusilli. The exact time is important for the user to avoid either under- or over-cooking the pasta and therefore the original packaging tends to be kept by users in order to retain this information.

Some efforts have been made to enable consumers to retain information found on packaging when using food storage containers, and in particular the expiry date of food. For example, containers for storing food comprising a means for indicating the date the food was placed in the container are disclosed in the art. WO 2006/008477 discloses an indicator means adapted to display the time and/or date of storage of a food item. Such containers reduce user reliance on the expiry date of the food, written on the original packaging, to determine how old stored food is.

However, to fully overcome consumer reliance on open original packaging for storing foods such as those listed above, it would be advantageous for a container for storing food to comprise a means for indicating the cooking time of the food to be stored.

The present invention relates to a container for storing food that seeks to overcome the above problem of reluctance to store foods requiring cooking, remote from their packaging. In aspects of the invention, the container may comprise a means for indicating a cooking time of food to be stored in the container. The user can read the cooking time from the original packaging of the food they wish to store and set the means to indicate this cooking time when transferring the food to the container. As the skilled person will appreciate from the below description, the present invention has clear advantages over the prior art.

According to the present invention there is provided a container for storing food, the container comprising: a base; a lid; and a means for indicating a cooking time of food to be stored, wherein the means comprises a movable part.

Advantageously, the means comprises an indicator.

Conveniently, the means further comprises at least one marking.

Preferably, the movable part is a rotatable dial.

Advantageously, the rotatable dial comprises the at least one marking.

Conveniently, the rotatable dial comprises the indicator.

Preferably, the rotatable dial comprises a grippable portion.

Advantageously, the grippable portion comprises the indicator

Conveniently, the means comprises 24 markings numbered in order 1, 2, 3, 4, 5, 6, 7, 8, 9, 10, 11, 12, 13, 14, 15, 20, 25, 30, 35, 40, 45, 50, 55 and 60.

Preferably, the at least one marking is molded, and/or adhesive label applied, or IML applied, or printed, or laser etched, or discoloured.

Advantageously, the movable part is a linear slider.

Conveniently, the base is configured to be stackable with respect to a second lid.

Preferably, the lid comprises an outer face and the means is located on the outer face.

Advantageously, the means does not protrude from the outer face of the lid.

Advantageously, the lid comprises at least one tab.

There is also provided a method for storing food, the method comprising: transferring food from its original packaging to a container comprising a base, a lid and a means for indicating a cooking time of food to be stored, wherein the means comprises a movable part; and setting the means to indicate the cooking time written on the original packaging of the food.

### BRIEF DESCRIPTION OF THE DRAWINGS

The objects and features of the invention noted above are explained in more detail with reference to the drawings, in which like reference numerals denote like elements, and in which:
FIG. 1 is a perspective view of a container according to the invention;
FIG. 2 is a plan view of a lid according to the invention; and
FIG. 3 depicts a plan view of an alternative means for indicating a cooking time, according to the invention.

### DETAILED DESCRIPTION OF THE INVENTION

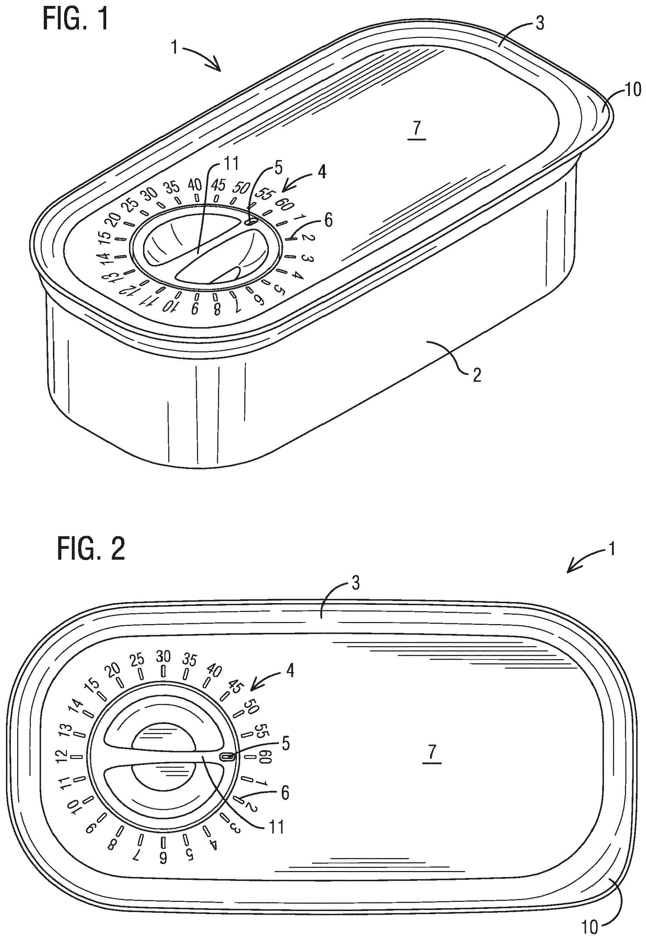

FIG. 1 depicts a container 1 according to the invention. Container 1 comprises a base 2, a lid 3 and a means 4 for indicating a cooking time of food to be stored. In the depicted arrangement the means is located on the lid 3 of the container 1. It can be appreciated that the means may also be located on the base 2 of the container 1 or elsewhere on the container 1, for example on a sidewall therefore. However the lid 3 is the preferred placement.

Lid 3 engages with base 2, as herein described, preferably rendering container 1 liquid tight, and more preferably rendering container 1 air tight. For example, base 2 may possess a lip and the circumference of lid 3 may be configured to clip onto this lip by way of a corresponding groove, thus sealing the container. This example represents just one possible means of engagement of lid 3 with base 2: other possible means of engagement are envisaged and the exact manner of connection between lid 3 and base 2 is not important for the present invention. The skilled person will appreciate that the lid may be connectable with the base in many different ways as known in the art.

The means 4, as depicted in FIG. 1, comprises a movable part which may be moved, or in this case rotated, by a user in order to "set" the means to a desired cooking time, as described below. In the illustrated arrangement the movable part is a rotatable circular disk. This rotable circular disk will henceforth be referred to as a rotatable dial 11. As shown, the means 4 may further comprise an indicator 5. The means 4 may preferably also comprise at least one marking 6 denoting a time. In the depicted arrangement, the rotatable dial 11 comprises the indicator 5 and the at least one marking 6 is not movable because it is located on part of the body of the lid 3. In use the user may rotate the dial 11 so that the indicator 5 points to a marking 6 corresponding to the cooking time written on the packaging of the food to be stored in the container.

In order for the consumer to rotate the moveable part, it is desirable for at least part of the dial 11 to be grippable. Preferably, this grippable portion should be ergonomic to maximise comfort for the user. In FIG. 1, the rotatable dial 11 possesses an upstanding portion which can be gripped by the user, for example between finger and thumb, when setting the means to indicate the cooking time of the food to be stored. The curved sides of the depicted grippable portion maximise comfort for the user when setting the means.

In an alternative arrangement, the grippable portion may be a dimple or recess on the surface of the rotatable dial. A user may insert a finger into the recess and then by moving the finger cause the rotatable dial to move. In the depicted arrangement of the means the indicator 5 is located on the grippable portion of the dial 11 but this does not need to be the case. An alternative arrangement, wherein the indicator is located remote from the grippable portion is also envisaged.

It can further be appreciated that an alternative arrangement to that shown in FIG. 1, wherein the at least one marking 6 is located on the rotatable dial 11 and the indicator 5 is not movable, is equally possible. It can also be appreciated that the rotatable moving part may take a form other than the rotatable dial 11 depicted, such as bezel or ring, and that such an alternative rotatable part may also comprise a grippable portion. For example the invention encompasses an arrangement having a rotatable bezel mounted around a circular disc (in an analogous manner to a rotatable bezel around a wristwatch face). Either the indicator 5 or the marking or markings 6 could be positioned on the bezel (with the other one of the marking(s) or indicator being stationary with respect to the rotatable bezel). The bezel can be provided with at least one grippable portion which could be a discrete area or a continuous set of serrations or scallops on the bezel.

FIG. 2 depicts a lid 3 having a particularly advantageous arrangement of the means 4, the means comprising twenty-four markings numbered in order 1, 2, 3, 4, 5, 6, 7, 8, 9, 10, 11, 12, 13, 14, 15, 20, 25, 30, 35, 40, 45, 50, 55 and 60. The numbers represent a cooking time in minutes. It can be appreciated that the majority of cooking time scenarios are covered by these twenty-four markings, especially the typical cooking times for different types of rice and pasta, for example.

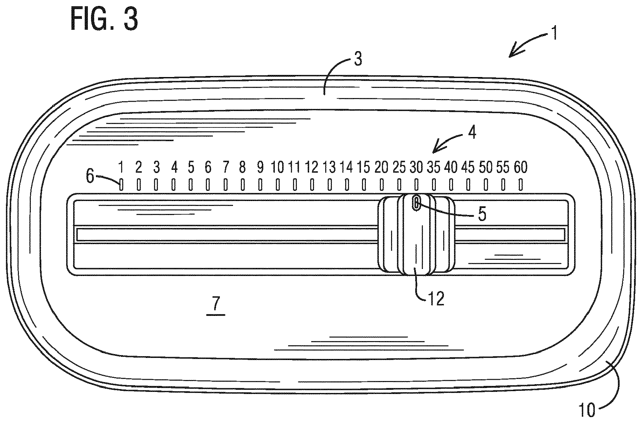

Alternative means to those depicted in FIGS. 1 and 2 are envisaged. FIG. 3 depicts a possible alternative means 4 comprising a linear slider 12. It can be appreciated that such alternative means may also comprise an indicator 5 and/or at least one marking 6. It can also be appreciated that the linear slider 12 may further comprise a grippable portion, as depicted. Rather than being rotatable the linear slider may be slid in one direction by the user to set a cooking time along a linear scale.

The at least one marking 6 indicating time, depicted in FIGS. 1-3, can be produced by a number of methods for example printing, laser etching, or discoloring compared the surrounding material. Methods such as chemical alteration of the constructional material of the container may be used to achieve discoloration. The at least one marking 6 may further be produced by moulding, in-mould labelling (IML), or adhesive labelling. Adhesive labelling may be used alone or in combination with moulding. In one preferred arrangement, the at least one marking 6 is produced by etching. In a second preferred arrangement, the at least one marking 6 is produced by moulding. Permanent methods such as etching and moulding are most preferred in the invention because they may be more accurately placed and are more durable than methods such as labelling.

In FIGS. 1 and 2 the rotatable dial is depicted as being located fully within a recess of outer face 7 of the lid 3; in other words the indicating means does not project upwardly beyond the plane of the lid 3. In alternative arrangements of the invention, the rotatable dial may be located so as to deliberately protrude upwardly from the plane of the outer face 7. It can be appreciated that an arrangement wherein the adjustable means 4 is not protruding from the outer face 7 is favourable for enabling stacking.

In the figures, the means 4 is located on the outer face 7 of the lid 3 but this is not to be construed as limiting the invention. In such an arrangement of the invention as depicted, the consumer can read the cooking time of food stored in the container without the need to open the container. This may be of benefit in scenarios where the user's decision on what to eat is dependent upon cooking time. The means may alternatively be located on the inner face of the lid or elsewhere on the container.

The lid of a container according to the invention may comprise at least one tab 10 as depicted in FIGS. land 2. The at least one tab 10 is grippable and can be used to aid disengagement of the lid from the base when opening the container.

It can be appreciated that the container 1 may take various shapes and have various dimensions. In a preferred arrangement, the container 1 has a capacity of 320 ml, 800 ml, 1.25 L, or 1.7 L. In a preferred arrangement, the lower surface of the base 2 is rectangular or rectangular with rounded corners. It can be appreciated that the indicator means should be large enough that it is easily manipulated by the user. It can also be appreciated that where the means comprises numerical markings 6, these should be large enough to be easily read by the user.

It is preferable that the indicator means, once "set" to a particular cooking time, should remain at the respective position of the marking corresponding to that cooking time and should not be moveable without positive force being applied to the indicator means, for example by a user. In the example of a rotatable dial give above this requires that the dial should not be able to rotate freely. Therefore the dial or other means should be rotatable only upon the application of force; for example the dial or other means should be resistant to movement either due to a tight friction fit between the dial or other means, and its point of connection, or there could be a mechanical means for maintaining the dial or other means locked at a particular marking location.

For example the rotatable dial could be provided with at least one projection which projects into a corresponding recess or recesses provided in a non-rotating part of the arrangement (for example the lid). Alternatively the or each projection could be on the stationary part and the recess or recesses on the dial. Either way, the projection(s) may be resiliently deformable and lock the dial into a stationary position when the projection is located in a recess, but may be deformed by force applied by a user and rotated out of the recess or recesses to allow the dial to continue to rotate.

The present invention further comprises a method for using a container according to the invention to store food. The method comprises transferring food from its original packaging to the container and setting the adjustable means 4 to indicate the cooking time written on the original packaging of the food to be stored.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A container for storing food, the container comprising:
a base;
a lid; and
a means for indicating a cooking time of food to be stored in the container,
wherein the means comprises a movable part.

2. The container of claim 1, wherein the means comprises an indicator.

3. The container of claim 2, wherein the means further comprises at least one marking.

4. The container of claim 3, wherein the movable part is a rotatable dial.

5. The container of claim 4, wherein the rotatable dial comprises the at least one marking.

6. The container of claim 4, wherein the rotatable dial comprises the indicator.

7. The container of any of claims 4 to 6, wherein the rotatable dial comprises a grippable portion.

8. The container of claim 7, wherein the grippable portion comprises the indicator.

9. The container of claim 3, wherein the movable part is a linear slider.

10. The container of any of claims 3 to 9, comprising 24 markings numbered in order 1, 2, 3, 4, 5, 6, 7, 8, 9, 10, 11, 12, 13, 14, 15, 20, 25, 30, 35, 40, 45, 50, 55 and 60.

11. The container of any of claims 3 to 10, wherein the at least one marking is molded, and/or adhesive label applied, or in-mould labelling applied, or printed, or laser etched, or discoloured.

12. The container of any preceding claim, wherein the base is configured to be stackable with respect to a second lid.

13. The container of any preceding claim, wherein the lid comprises an outer face and wherein the means is located on the outer face, and preferably
wherein the means does not protrude substantially from the outer face of the lid.

14. The container of any preceding claim, wherein the lid comprises at least one tab.

15. A method for storing food, the method comprising:
transferring food from its original packaging to a container comprising a base, a lid and a means for indicating a cooking time of food, wherein the means comprises a movable part; and
setting the means to indicate the intended cooking time of the food.
